# EUROPÄISCHE PATENTSCHRIFT

(11) **EP 4 426 959 B1**
(45) Veröffentlichungstag und Bekanntmachung des Hinweises auf die Patenterteilung: **27.08.2025**
(21) Anmeldenummer: 22813221.3
(22) Anmeldetag: 03.11.2022
(51) Int. Cl.: F16K 1/46, F16K 1/20, F16K 1/42, B60L 50/70, F02D 9/10, F02M 26/70, F16K 1/226, F16J 15/06

(54) **DICHTUNGSANORDNUNG**
SEAL ASSEMBLY
ENSEMBLE JOINT D'ÉTANCHÉITÉ

(30) Priorität: 05.11.2021 EP 21465561; 10.11.2021 DE 102021212622
(43) Veröffentlichungstag der Anmeldung: 11.09.2024
(73) Patentinhaber: Schaeffler Technologies AG & Co. KG, 91074 Herzogenaurach (DE)
(72) Erfinder: POPA, Alexandru, 80687 München (DE); MIKOLAJEK, Carsten, 80687 München (DE); BELIN, Cosmin Ion, 80687 München (DE); CRACIUN, Dumitru, 80687 München (DE); CHITAC, Robert-Marian, 80687 München (DE); DRIENOVSKY, Mihai, 80687 München (DE); RASICI, Deian, 80687 München (DE); ISAINCU, Alexandru-Ilie, 80687 München (DE); BRUJAN, Denis, 80687 München (DE)
(74) Vertreter: Vitesco Technologies
(86) Internationale Anmeldenummer: PCT/EP2022/080614
(87) Internationale Veröffentlichungsnummer: WO 2023/078967

(56) Entgegenhaltungen:
- DE-U- 7 006 387
- DE-U1- 29 905 744
- US-A- 4 073 473
- US-A1- 2016 138 719

## Beschreibung

Die vorliegende Erfindung betrifft eine Dichtungsanordnung zur Verwendung in einem ein Gehäuse und eine Klappe aufweisenden Fluidventil, ein Fluidventil mit der Dichtungsanordnung, eine Brennstoffzellenanordnung mit dem Fluidventil, ein Kraftfahrzeug mit dem Fluidventil sowie ein Verfahren zum Montieren des Fluidventils.

Aus betriebsinterner Praxis sind zum Sperren von Gasleitungen Ventilklappen bekannt, die zum Sperren einer Ventilöffnung um eine zentrale Achse in der Ventilöffnung schwenken (sogenannte Schmetterlingsventile) oder um eine seitliche Scharnierachse auf einen Ventilsitz schenken (sogenannte Scharnier- bzw. Türventile).

Die US2016/138719A1 und die DE7006387U offenbaren Dichtungsanordnungen nach dem Oberbegriff des Anspruchs 1.

Eine Aufgabe einer Ausführung der vorliegenden Erfindung ist es, eine Dichtungsanordnung zur Verwendung in einem ein Gehäuse und eine Klappe aufweisenden Fluidventil zu verbessern.

Diese Aufgabe wird durch eine Dichtungsanordnung mit den Merkmalen des Anspruchs 1 gelöst. Die Ansprüche 7 bis 13 stellen ein Fluidventil, und die Ansprüche 14, 15 und 16 eine Brennstoffzellenanordnung bzw. ein Kraftfahrzeug mit einem hier beschriebenen Fluidventil sowie ein Verfahren zum Montieren des Fluidventils unter Schutz.

Nach einer Ausführung der vorliegenden Erfindung ist eine Dichtungsanordnung zur Verwendung in einem ein Gehäuse und eine Klappe aufweisenden Fluidventil vorgesehen, das dazu eingerichtet ist, einen Fluidfluss durch eine Ventilöffnung des Fluidventils durch Verstellen einer Position der Klappe zwischen einer Schließ-Stellung und einer Offen-Stellung zu steuern. Hierbei weist die Dichtungsanordnung nach einer Ausführung einen Haltering mit einem Haltering-Anlageabschnitt und einer Vielzahl von Beinen, und ein ringförmiges, flexibles Dichtungselement auf, das einen umlaufenden Radialsteg, und eine an den Radialsteg angrenzende, bei bestimmungsgemäßem Gebrauch stromaufwärtsseitige, erste Radialfläche aufweist, die dazu eingerichtet ist, als Zentrierfläche für eine Presspassung mit einer entsprechenden Gegenzentrierfläche einer Innenwand des Gehäuses zu fungieren, wobei eine bei bestimmungsgemäßem Gebrauch stromaufwärtsseitige erste Seitenfläche des Radialstegs dazu vorgesehen ist, an einer Anlagefläche der Innenwand des Gehäuses anzuliegen, der Haltering-Anlageabschnitt eine Haltering-Anlagefläche aufweist, die bei dem bestimmungsgemäßen Gebrauch dazu vorgesehen ist, an einer bei dem bestimmungsgemäßen Gebrauch stromabwärtsseitigen zweiten Seitenfläche des Radialstegs anzuliegen, und freie Enden zumindest einer Teilmenge der Vielzahl von Beinen bei dem bestimmungsgemäßen Gebrauch dazu vorgesehen sind, sich an einem im Wesentlichen senkrecht zu der Flussrichtung des Fluids erstreckenden Abstützabschnitt der Innenwand des Gehäuses unter einer Vorspannung abzustützen.

Eine hier genannte Offen-Stellung kann in einer Ausführung eine (offene) End-Stellung der Klappe sein. Entsprechend ist die Ventilanordnung bzw. -öffnung in einer Ausführung vollständig bzw. maximal offen bzw. geöffnet, wenn die Klappe sich in dieser Offen- bzw. offenen End-Stellung befindet. Gleichermaßen kann eine hier genannte Offen-Stellung auch zwischen der Schließ- und (offenen) End-Stellung liegen.

Durch die Verwendung der Kombination aus dem flexiblen Dichtungselement und dem Haltering kann in einer Ausführung vorteilhaft das flexible Dichtungselement einerseits durch die (radial wirkende) Druckkraft, welche durch die Presspassung zwischen der ersten Radialfläche des ringförmigen Radialstegs und der Gegenzentrierfläche der Innenwand des Gehäuses erzeugt wird, und andererseits durch die Federkraft, die in axialer Richtung durch die sich unter der Vorspannung an dem Abstützabschnitt der Innenwand des Gehäuses abstützenden freien Enden der Beine des Halterings erzeugt wird, gehalten werden. Weiterhin kann hierdurch in einer Ausführung auf eine einfache und kostengünstige Weise eine radiale Fixierung des Dichtungselements erreicht werden.

Das Dichtungselement kann aus einer Reihe von flexiblen Materialien hergestellt werden, einschließlich spezieller reibungsarmer Materialien wie etwa Ethylen-Propylen-Dien-Kautschuk (EPDM). Zur Verbesserung der Reibungseigenschaften und somit zur Verbesserung der Fixierung des Dichtungselements, kann das Dichtelement mit einem geeigneten Material zusätzlich beschichtet werden.

Der Haltering kann beispielsweise unter Verwendung eines Blechstanzverfahrens hergestellt werden bzw. sein. In einer Ausführung wird der Haltering aus einem zusammenhängenden Stück Blech gefertigt, wobei die Beine durch Schneiden bzw. Stanzen eines Blechs ausgebildet werden. Hierbei werden die Schnitte/Stanzvorgänge in einer Ausführung derart ausgeführt, dass sie die geringstmögliche Breite aufweisen, die das jeweilige Herstellungsverfahren ermöglicht. Hierbei werden in einer Ausführung die Schnitte ausgehend von der Seite des Haltering-Anlageabschnitts ausgeführt, um vorteilhaft die Bildung scharfer Kanten zu verhindern, die eine Beschädigung des Dichtungselements verursachen könnten. Die Beine des Halterings weisen in einer oder mehreren Ausführungen eine oder mehrere Biegungen auf und/oder sind elastisch verformbar.

In einer Ausführung ist eine Dicke, gemessen in axialer Richtung des Dichtungselements, unter Berücksichtigung der Fertigungstoleranzen und dem Einfluss thermischer Effekte, des Radialstegs derart gewählt, dass der Radialsteg ein geeignetes Maß an Druckraft/Widerstand bereitstellt, wenn die Haltering-Anlagefläche diesen gegen die Anlagefläche der Innenwand des Gehäuses drückt, um sicherzustellen, dass die freien Enden der (elastischen) Beine des Halterings bei der Montage ausgehend von einem durch einen Kontakt mit der Innenwand des Gehäuses bewirkten verbogenen Zustand in ihren ursprünglichen Zustand zurückkehren können, um sich an dem Abstützabschnitt abzustützen.

Erfindungsgemäß weist das Dichtungselement eine umlaufende Dichtlippe auf, die sich bei dem bestimmungsgemäßen Gebrauch in Richtung stromaufwärts und in Richtung der Innenwand des Gehäuses erstreckt, und deren innere Umfangsfläche einen Ventilsitz bildet, der die Ventilöffnung definiert und der dazu vorgesehen ist, von der Klappe in der Schließ-Stellung des Fluidventils kontaktiert zu werden. Somit kann das Dichtungselement funktionstechnisch in zwei Abschnitte unterteilt werden, nämlich zum einen in einen inneren Abschnitt, der die innere Umfangsfläche der Dichtlippe aufweist und für die Hauptdichtungsfunktion des Ventils sowie die Optimierung des Fluidflusses über sich selbst bestimmt ist, und zum anderen in einen äußeren Montageabschnitt, der sowohl die Funktion der Befestigung in dem durch das Gehäuse gebildeten Strömungskanal für das Fluid als auch eine sekundäre Dichtungsfunktion erfüllt.

Erfindungsgemäß ist zwischen einem die erste Radialfläche aufweisenden Abschnitt des Dichtungselements und der Dichtlippe eine Aussparung gebildet.

Hierdurch kann dem Dichtungselement, insbesondere der Dichtlippe, die Möglichkeit gegeben werden, sich bei einer Bewegung des Fluidventils, insbesondere der Klappe zum Öffnen/Schließen der Ventilöffnung, elastisch in Richtung der Innenwand des Gehäuses auszudehnen.

In einer Ausführung ist die Aussparung derart gestaltet, dass sie an ihrer Basis eine Rundung mit einem großen Radius aufweist, um die mechanische Beanspruchung in diesem Bereich zu reduzieren, und somit die Lebensdauer des Dichtungselements zu erhöhen. Diese Ausführung ermöglicht auch einen Druckunterschied zwischen den beiden Seiten (stromaufwärtsseitige Seite/stromabwärtsseitige Seite) des Ventils, um den Anpressdruck der Dichtlippe gegen die Klappe weiter zu erhöhen oder zu erniedrigen, in Abhängigkeit davon, welcher Druck höher ist.

In einer Ausführungsform verjüngt sich ein stromaufwärts gelegener Endabschnitt des die erste Radialfläche aufweisenden Abschnitts des Dichtungselements radial nach innen.

Hierdurch kann in einer Ausführung bei der Montage des Fluidventils ein Einsetzen des Dichtungselements in den die Gegenzentrierfläche aufweisenden Abschnitt des Gehäuses erleichtert werden. Da zwischen der ersten Radialfläche und der Gegenzentrierfläche eine Presspassung erfolgt, wird auch die Dichtung zwischen dem Dichtungselement und dem Gehäuse sichergestellt.

In einer Ausführung weist das Dichtungselement eine an den Radialsteg angrenzende, bei bestimmungsgemäßem Gebrauch stromabwärtsseitige, zweite Radialfläche auf die mit Bezug auf die erste Radialfläche in radialer Richtung nach innen versetzt ist. Hierbei erstreckt sich die zweite Radialfläche in einer Ausführung parallel, oder zumindest im Wesentlichen parallel zu der Flussrichtung des Fluids.

Hierbei verjüngt sich in einer Ausführung ein stromabwärts gelegener Endabschnitt des die zweite Radialfläche aufweisenden Abschnitts des Dichtungselements radial nach innen.

Weiterhin kann hierbei bei dem bestimmungsgemäßen Gebrauch insbesondere der Haltering-Anlageabschnitt zwischen der zweiten Radialfläche und der Innenwand des Gehäuses angeordnet sein, wobei der Haltering beabstandet von der zweiten Radialfläche angeordnet sein kann.

In einer Ausführung erstreckt sich die Vielzahl der Beine mit Bezug auf den (ebenen) Haltering-Anlageabschnitt über einen äußeren gebogenen Abschnitt unter einem stumpfen Winkel radial nach außen.

Hierbei kann der Radius des gebogenen Abschnitts bei der Herstellung größer gewählt werden als spezifiziert, um sicherzustellen, dass der Federeffekt und die Biegung genau am Radius erfolgen. Hierbei ist insbesondere ein durch die freien Enden zumindest der Teilmenge der Vielzahl von Beinen definierter Außendurchmesser des Halterings größer als ein Innendurchmesser eines Abschnitts des Gehäuses, welcher den Haltering bei dem bestimmungsgemäßen Gebrauch in einem Einbauzustand umgibt. Auf diese Weise befinden sich diese Beine in dem eingebauten Zustand in einem elastisch verformten Zustand und somit kann in einer Ausführung vorteilhaft sichergestellt werden, dass sich die Enden an dem Abstützabschnitt unter der Vorspannung abstützen.

Die Breite der (gebogenen) Beine des Halterings wird in Abhängigkeit von den gegensätzlichen Anforderungen bezüglich des Widerstands gegenüber einer plastischen Verformung während der Montage und der in radialer Richtung wirkenden Federkraft, die sowohl zur Zentrierung des Halterings und gegebenenfalls des Dichtungselements, als auch zur Verhinderung, dass sich Haltering und somit auch das Dichtungselement während des Betriebs des Fluidventils aus der Einbauposition löst.

In einer Ausführungsform sind eines oder mehrere der Beine kürzer bzw. werden abgeschnitten, um für den Herstellungsprozess erforderliche Klemmflächen zu schaffen. Die kürzeren Beine werden so gewählt, dass sie gleichmäßig kreisförmig verteilt sind, um ein Ungleichgewicht in der durch die (längeren) Beine erzeugten radialen Federkraft zu vermeiden.

In einer Ausführungsform weist der Haltering einen inneren gebogenen Abschnitt auf, der sich bei dem bestimmungsgemäßen Gebrauch von dem Haltering-Anlageabschnitt im Wesentlichen in Richtung stromabwärts erstreckt, und insbesondere der zweiten Radialfläche des Radialstegs gegenüberliegt.

Hierdurch kann in einer Ausführung eine Steifigkeit des Halterings erhöht werden.

In einer Ausführung ist die erste Seitenfläche und/oder die zweite Seitenfläche des Radialstegs als strukturierte Oberfläche gebildet und/oder weist zumindest eine ringförmige Rippe auf.

Hierdurch können in einer Ausführung durch die erste Seitenfläche des Radialstegs der Halt beim Drücken gegen die Anlagefläche der Innenwand des Gehäuses in axialer Richtung und die Dichtigkeit gegenüber einem Luftaustritt aus dem Fluidventil gewährleistet werden, und durch die zweite Seitenfläche der Halt beim Zusammendrücken durch die Haltering-Anlagefläche gewährleistet werden.

Nach einer Ausführung der vorliegenden Erfindung weist ein Fluidventil, insbesondere für eine Gasleitung, insbesondere einer Brennstoffzelle und/oder eines Kraftfahrzeugantriebs, ein Gehäuse mit einer Innenwand, eine Klappe und eine im vorhergehenden beschriebene Dichtungsanordnung auf, wobei das Fluidventil dazu eingerichtet ist, einen Fluidfluss durch eine Ventilöffnung des Fluidventils durch Verstellen einer Position der Klappe zwischen einer Schließ-Stellung und einer Offen-Stellung zu steuern, wobei die Innenwand des Gehäuses die Gegenzentrierfläche, die Anlagefläche und den Abstützabschnitt aufweist, die erste Radialfläche des Dichtungselements an der Gegenzentrierfläche unter einer Vorspannung anliegt, die erste Seitenfläche des Radialstegs an der Anlagefläche anliegt, die Haltering-Anlagefläche an der zweiten Seitenfläche des Radialstegs anliegt, und freie Enden von zumindest einer Teilmenge der Vielzahl von Beinen an dem Abstützabschnitt unter einer Vorspannung abgestützt sind.

**In** einer Ausführung weist das Dichtungselement die umlaufende Dichtlippe auf, wobei die Innenwand einen stromaufwärts an die Gegenzentrierfläche anschließenden, sich weitenden Abschnitt aufweist, und eine äußere Umfangsfläche der Dichtlippe beabstandet von dem sich weitenden Abschnitt ist und diesem gegenüberliegt.

**In** einer Ausführung weist die Innenwand einen stromaufwärts an den sich weitenden Abschnitt anschließenden geradlinigen Abschnitt auf, der sich parallel zu der Flussrichtung des Fluids erstreckt.

Hierdurch wird in einer Ausführung vorteilhaft ein Freiraum für eine Bewegung der Dichtlippe bereitgestellt. Weiterhin können hierbei die Übergänge zwischen den einzelnen Abschnitten der Innenwand abgerundet sein, um Beschädigungen verursachende scharfe Kanten zu vermeiden.

**In** einer Ausführung weist die Innenwand einen stromabwärts an die Gegenzentrierfläche anschließenden Abschnitt auf, der sich senkrecht zu der Flussrichtung des Fluids radial nach außen erstreckt und die Anlagefläche aufweist.

Durch diesen Abschnitt wird die Toleranz des Presssitzes in der Schließ-Stellung der Klappe durch den Abstand zu einer Drehachse einer Welle, mit der die Klappe bewegt wird, eingestellt.

In einer Ausführung weist die Innenwand einen stromabwärts an den an die Gegenzentrierfläche anschließenden Abschnitt anschließenden weiteren Abschnitt auf, der sich parallel zu der Flussrichtung des Fluids erstreckt, wobei ein Teilabschnitt des weiteren Abschnitts einer nach außen weisenden Oberseite des Radialstegs gegenüberliegt und von dieser beabstandet ist.

Hierdurch kann in einer Ausführung eine Bewegung der Beine des Halterings in radialer Richtung beschränkt werden.

In einer Ausführung schließt der Abstützabschnitt stromabwärts an den weiteren Abschnitt an, und erstreckt sich ausgehend von dem weiteren Abschnitt radial nach innen.

In einer Ausführung weist die Innenwand einen stromabwärts an den Abstützabschnitt anschließenden weiteren anderen Abschnitt mit einem ersten, an den Abstützabschnitt anschließenden Abschnitt, der sich parallel zu der Flussrichtung des Fluids erstreckt, und einem zweiten, an den ersten Abschnitt anschließenden und sich weitenden Abschnitt, auf.

Nach einer Ausführung der vorliegenden Erfindung weist eine Brennstoffzellenanordnung, insbesondere für einen Kraftfahrzeugantrieb, wenigstens eine Brennstoffzelle, wenigstens eine Gasleitung, insbesondere zum Zu- und Abführen von Gas zu der bzw. von der Brennstoffzelle, und ein im vorhergehenden beschriebenes Fluidventil zum Sperren der Gasleitung durch Verstellen der Klappe in die Schließstellung auf.

Nach einer Ausführung der vorliegenden Erfindung weist ein Kraftfahrzeug wenigstens ein im vorhergehenden beschriebenes Fluidventil, insbesondere zum Sperren einer Leitung, insbesondere Gasleitung, des Kraftfahrzeugs, insbesondere einer Kraftfahrzeugantriebs- und/oder Brennstoffzellenanordnungs-Leitung, durch Verstellen der Klappe in die Schließstellung auf.

Nach einer Ausführung der vorliegenden Erfindung weist ein Verfahren zum Montieren eines im vorhergehenden beschriebene Fluidventils die Schritte auf: Bereitstellen des Gehäuses mit einer Bohrung,
Einführen einer Welle durch die Bohrung,
Einbringen der Klappe von einer stromabwärts gelegenen Seite des Gehäuses und Montieren der Klappe an der Welle,
Einbringen des Dichtungselements von der stromabwärts gelegenen Seite des Gehäuses derart, dass die erste Seitenfläche des Radialstegs an der Anlagefläche der Innenwand des Gehäuses anliegt, und die erste Radialfläche an der Gegenzentrierfläche der Innenwand des Gehäuses anliegt, und
Einbringen des Halterings von der stromabwärts gelegenen Seite des Gehäuses derart, dass die freien Enden der zumindest einen Teilmenge der Vielzahl von Beinen während des Einführens durch einen Kontakt mit der Innenwand des Gehäuses elastisch radial nach innen gebogen werden, und nach passieren des Abstützabschnitts durch eine Federkraft der Beine nach radial außen zurückschnappen, wenn der Haltering mit der Haltering-Anlagefläche derart gegen die zweite Seitenfläche des Radialstegs gedrückt wird, dass der Radialsteg entlang der Flussrichtung des Fluids zusammengedrückt wird.

Weitere Vorteile und Merkmale ergeben sich aus den Unteransprüchen und den Ausführungsbeispielen. Hierzu zeigt, teilweise schematisiert:
- Fig. 1: eine Querschnittsansicht eines Fluidventils mit einer Dichtungsanordnung nach einer Ausführung der vorliegenden Erfindung,
- Fig. 2: eine Querschnittsansicht eines Halterings der Dichtungsanordnung,
- Fig. 3: eine Draufsicht auf den in Fig. 2 gezeigten Haltering, und
- Fig. 4: eine perspektivische Querschnittsansicht des Fluidventils.

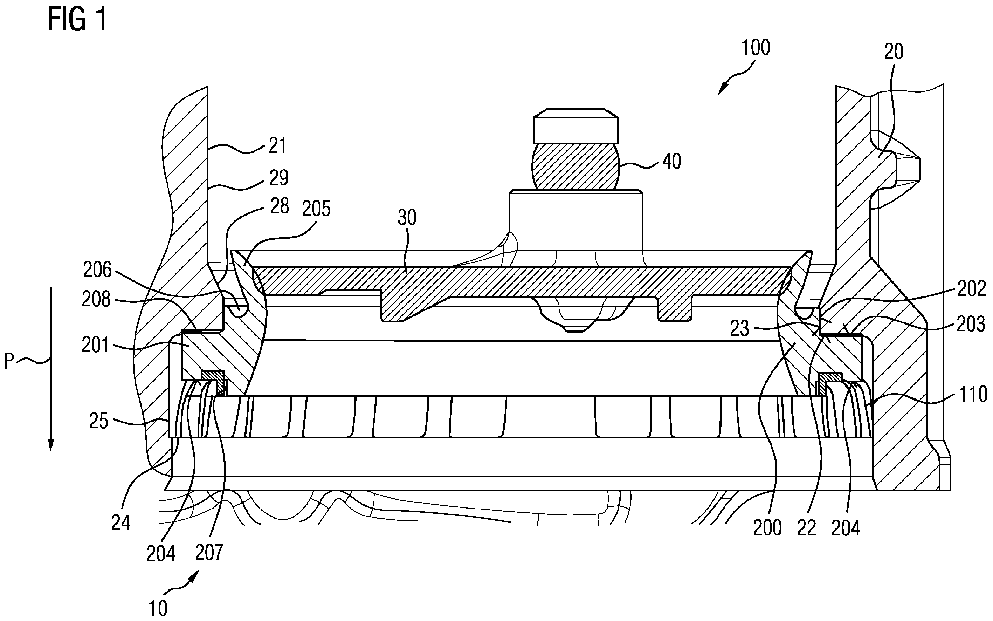

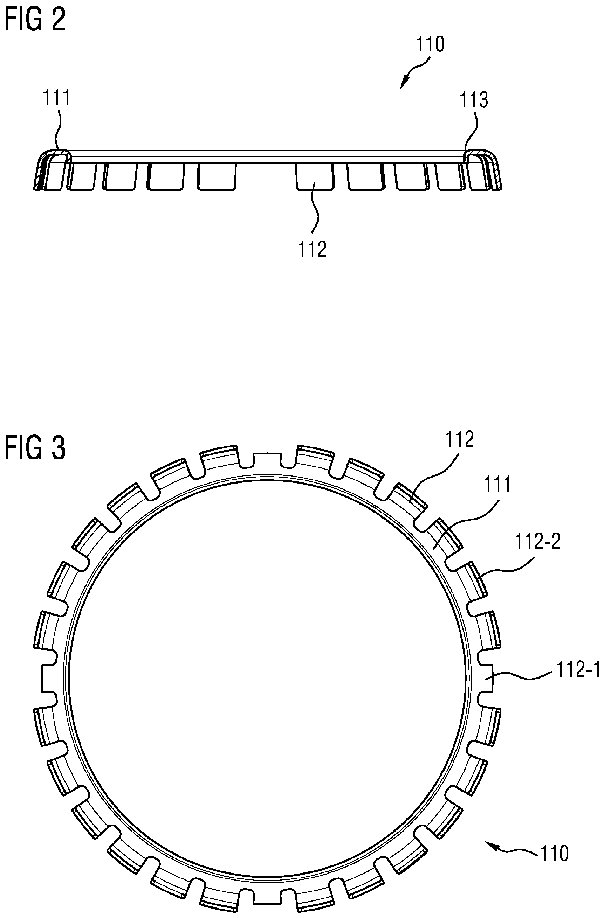

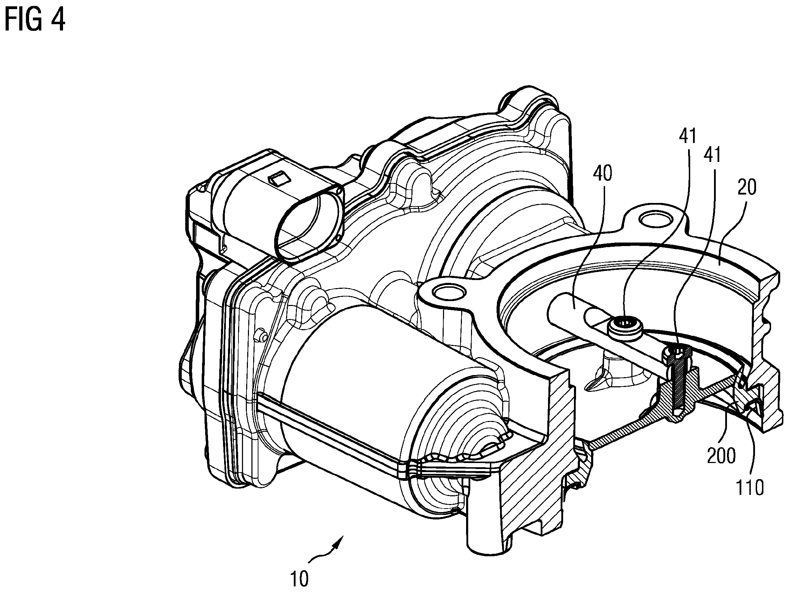

Fig. 1 zeigt ein Fluidventil mit einer Dichtungsanordnung nach einer Ausführung der vorliegenden Erfindung. Fig. 2 zeigt eine Querschnittsansicht eines Halterings der Dichtungsanordnung. Fig. 3 zeigt eine Draufsicht auf den in Fig. 2 gezeigten Haltering, und Fig. 4 zeigt eine perspektivische Querschnittsansicht des Fluidventils.

Das Fluidventil 10 weist ein Gehäuse 20, ein Klappe 30 und eine in dem Gehäuse 20 aufgenommene Dichtungsanordnung 100 auf, und ist dazu eingerichtet, einen Fluidfluss eines Fluids in einer Fluid-, insbesondere Gasleitung, in die das Fluidventil 10 geschaltet bzw. eingebaut ist, das in Fig. 1 wie durch den Pfeil P veranschaulicht von oben nach unten fließt, durch eine Ventilöffnung des Fluidventils 10 durch Verstellen einer Position der Klappe 30 mittels einer mit der Klappe 30 durch Schrauben 41 verbundenen Welle 40, die wie in Fig. 4 veranschaulicht durch eine Bohrung des Gehäuses 20 eingeführt ist, zwischen einer Schließ-Stellung und einer Offen-Stellung zu steuern.

Die Dichtungsanordnung 100 weist einen Haltering 110 mit einem Haltering-Anlageabschnitt 111 und einer Vielzahl von Beinen 112 sowie ein ringförmiges, flexibles Dichtungselement 200 auf, das einen umlaufenden Radialsteg 201, und eine an den Radialsteg 201 angrenzende, stromaufwärtsseitige, erste Radialfläche 202 aufweist, die als Zentrierfläche für eine Presspassung mit einer entsprechenden Gegenzentrierfläche 23 einer Innenwand 21 des Gehäuses 20 dient.

Eine stromaufwärtsseitige erste Seitenfläche 203 des Radialstegs 201 liegt an einer Anlagefläche 22 der Innenwand 21 des Gehäuses 20 an, wobei der Haltering-Anlageabschnitt 111 eine Haltering-Anlagefläche aufweist, die an einer stromabwärtsseitigen zweiten Seitenfläche 204 des Radialstegs 201 anliegt, und freie Enden zumindest einer Teilmenge der Vielzahl von Beinen 112 sich an einem im Wesentlichen senkrecht zu der Flussrichtung P des Fluids erstreckenden Abstützabschnitt 24 der Innenwand des Gehäuses 20 unter einer Vorspannung abstützen.

Wie insbesondere in den Fig. 1 und 2 veranschaulicht, erstreckt sich die Vielzahl der Beine 112 sowohl in dem vorgespannten Zustand (Fig. 1) als auch in einem nicht vorgespannten Zustand (Fig. 2) mit Bezug auf den Haltering-Anlageabschnitt 111 über einen äußeren gebogenen Abschnitt unter einem stumpfen Winkel radial nach außen.

Bevorzugt sind, wie in Fig. 3 veranschaulicht, eines oder mehrere der Beine 112-1 kürzer bzw. werden abgeschnitten, um für den Herstellungsprozess erforderliche Klemmflächen zu schaffen. Die Anordnung der kürzeren Beine 112-1 wird hierbei so gewählt, dass sie gleichmäßig kreisförmig verteilt sind, um ein Ungleichgewicht in der durch die (längeren) Beine 112-2 erzeugten (radialen) Federkraft zu vermeiden.

Das Dichtungselement 200 weist ferner eine umlaufende Dichtlippe 205 auf, die sich in Richtung stromaufwärts und in Richtung der Innenwand 21 des Gehäuses 20 erstreckt, und deren innere Umfangsfläche einen Ventilsitz bildet, der die Ventilöffnung definiert und der von der Klappe 30 in der in Fig. 1 gezeigten Schließ-Stellung des Fluidventils 10 kontaktiert wird.

Hierbei ist zwischen einem die erste Radialfläche 202 aufweisenden Abschnitt des Dichtungselements 200 und der Dichtlippe 205 eine Aussparung 206 gebildet, wobei ein stromaufwärts gelegener Endabschnitt des die erste Radialfläche 202 aufweisenden Abschnitts des Dichtungselements 200 sich radial nach innen verjüngt.

Die Innenwand 21 des Gehäuses 20 weist einen stromaufwärts an die Gegenzentrierfläche 23 anschließenden, sich weitenden Abschnitt 28 auf, wobei eine äußere Umfangsfläche der Dichtlippe 205 beabstandet von dem sich weitenden Abschnitt 28 ist und diesem gegenüberliegt.

Die Innenwand 21 des Gehäuses 20 weist ferner einen stromaufwärts an den sich weitenden Abschnitt 28 anschließenden geradlinigen Abschnitt 29 auf, der sich parallel zu der Flussrichtung P des Fluids erstreckt.

Das Dichtungselement 200 weist ferner eine an den Radialsteg 201 angrenzende, stromabwärtsseitige, zweite Radialfläche 207 auf, die mit Bezug auf die erste Radialfläche 202 in radialer Richtung nach innen versetzt ist. Vorzugsweise sind wie in Fig. 1 veranschaulicht hierbei die erste Seitenfläche 203 und die zweite Seitenfläche 204 des Radialstegs 201 als strukturierte Oberfläche gebildet und/oder weisen zumindest eine ringförmige Rippe 208 auf.

Der Haltering 110 weist einen inneren gebogenen Abschnitt 113 auf, der sich wie in Fig. 1 veranschaulicht von dem Haltering-Anlageabschnitt 111 im Wesentlichen in Richtung stromabwärts erstreckt, und insbesondere der zweiten Radialfläche 207 des Dichtungselements 200 gegenüberliegt.

Die Innenwand 21 des Gehäuses weist ferner einen stromabwärts an die Gegenzentrierfläche 23 anschließenden Abschnitt auf, der sich senkrecht zu der Flussrichtung P des Fluids radial nach außen erstreckt und die Anlagefläche 22 aufweist, an der die erste Seitenfläche 203 des Radialstegs 201 anliegt.

Zudem weist die Innenwand 21 des Gehäuses einen stromabwärts an den an die Gegenzentrierfläche 23 anschließenden Abschnitt anschließenden weiteren Abschnitt 25 auf, der sich parallel zu der Flussrichtung P des Fluids erstreckt, wobei ein Teilabschnitt des weiteren Abschnitts 25 einer nach außen weisenden Oberseite des Radialstegs 201 gegenüberliegt und von dieser beabstandet ist.

Der Abstützabschnitt 24 schließt stromabwärts an den weiteren Abschnitt 25 an, und erstreckt sich ausgehend von dem weiteren Abschnitt 25 radial nach innen.

Die Innenwand 21 des Gehäuses 20 weist ferner einen stromabwärts an den Abstützabschnitt 24 anschließenden weiteren anderen Abschnitt 26 mit einem ersten, an den Abstützabschnitt 24 anschließenden Abschnitt, der sich parallel zu der Flussrichtung des Fluids erstreckt, und einem zweiten, an den ersten Abschnitt anschließenden und sich weitenden Abschnitt auf.

Zur Montage des Fluidventils 10 wird zunächst ein eine Bohrung aufweisendes Gehäuse 20 bereitgestellt, und die Welle 40 durch die Bohrung in das Innere des Gehäuses 20 eingeführt. Dann wird die Klappe 30 von der stromabwärts gelegenen Seite in das Innere des Gehäuses 20 eingeführt, bis die Klappe 30 eine ebene Fläche der Welle 40 berührt. In diesem Zustand wird die Klappe 30 mit Hilfe eines Werkzeugs, das später auch zur Zentrierung des Dichtungselements 200 verwendet wird, zentriert, wobei eine umlaufende Zentrierfläche des Werkzeugs die Oberfläche der Innenwand 21 des Gehäuses 20 berührt.

Danach werden zwei Schrauben 41 von der stromaufwärts gelegenen Seite in das Innere des Gehäuses 20 eingeführt, in dafür vorgesehene zwei Schraubenlöcher in der Welle 40 eingeschraubt, und nach Durchführung erforderlicher Einstellungen angezogen.

Dann wird das Dichtungselement 200 in das Gehäuse 20 eingelegt und in den dafür vorgesehenen Abschnitt des Gehäuses 20, der die Gegenzentrierfläche 23 enthält, gedrückt, bis die stromaufwärts gelegene (strukturierte) erste Seitenfläche 203 des Radialstegs 201 an der Anlagefläche 22 der Innenwand 21 des Gehäuses 20 anliegt. In diesem Zustand ist das Dichtungselement 200 in dem Gehäuse 20 zentriert.

Anschließend wird der Haltering 110 von der stromabwärts gelegenen Seite in das Innere des Gehäuses 20 eingeführt, bis die Haltering-Anlagefläche an der stromabwärtsseitigen zweiten (strukturierten) Seitenfläche 204 des Radialstegs 201 anliegt. Bei der Montage werden die Beine 112 elastisch zusammengedrückt, wenn der Haltering 110 gegen den Radialsteg 201 des flexiblen Dichtungselements 200 gedrückt wird, was genügend Spielraum für das weitere Einschieben des Halterings 110 bietet, bis die freien Enden der Beine 122 des Halterings 110 nach passieren des Abstützabschnitts 24 durch eine Federkraft der Beine 112 nach radial außen zurückschnappen, wenn der Haltering 110 mit der Haltering-Anlagefläche derart gegen die zweite Seitenfläche 204 des Radialstegs 201 gedrückt wird, dass der Radialsteg 201 entlang der Flussrichtung des Fluids zusammengedrückt wird.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Fluidventil
- 20: Gehäuse
- 21: Innenwand
- 22: Anlagefläche
- 23: Gegenzentrierfläche
- 24: Abstützabschnitt
- 25: weiterer Abschnitt
- 26: weiterer anderer Abschnitt
- 28: sich weitender Abschnitt
- 29: geradliniger Abschnitt
- 30: Klappe
- 40: Welle
- 41: Schraube
- 100: Dichtungsanordnung
- 110: Haltering
- 111: Haltering-Anlageabschnitt
- 112: Bein
- 112-1: kurzes Bein
- 112-2: langes Bein
- 113: innerer gebogener Abschnitt
- 200: Dichtungselement
- 201: Radialsteg
- 202: erste Radialfläche
- 203: erste Seitenfläche
- 204: zweite Seitenfläche
- 205: Dichtlippe
- 206: Aussparung
- 207: zweite Radialfläche
- 208: ringförmige Rippe

## Patentansprüche

1. Dichtungsanordnung (100) zur Verwendung in einem ein Gehäuse (20) und eine Klappe (30) aufweisenden Fluidventil (10), das dazu eingerichtet ist, einen Fluidfluss durch eine Ventilöffnung des Fluidventils (10) durch Verstellen einer Position der Klappe (30) zwischen einer Schließ-Stellung und einer Offen-Stellung zu steuern, wobei die Dichtungsanordnung (100) einen Haltering (110) mit einem Haltering-Anlageabschnitt (111) und einer Vielzahl von Beinen (112), und ein ringförmiges, flexibles Dichtungselement (200) aufweist, das einen umlaufenden Radialsteg (201), und eine an den Radialsteg (201) angrenzende, bei bestimmungsgemäßem Gebrauch stromaufwärtsseitige, erste Radialfläche (202) aufweist, die dazu eingerichtet ist, als Zentrierfläche für eine Presspassung mit einer entsprechenden Gegenzentrierfläche (23) einer Innenwand (21) des Gehäuses (20) zu fungieren, wobei eine bei bestimmungsgemäßem Gebrauch stromaufwärtsseitige erste Seitenfläche (203) des Radialstegs (201) dazu vorgesehen ist, an einer Anlagefläche (22) der Innenwand (21) des Gehäuses (20) anzuliegen, der Haltering-Anlageabschnitt (111) eine Haltering-Anlagefläche aufweist, die bei dem bestimmungsgemäßen Gebrauch dazu vorgesehen ist, an einer bei dem bestimmungsgemäßen Gebrauch stromabwärtsseitigen zweiten Seitenfläche (204) des Radialstegs (201) anzuliegen, und freie Enden zumindest einer Teilmenge der Vielzahl von Beinen (112) bei dem bestimmungsgemäßen Gebrauch dazu vorgesehen sind, sich an einem im Wesentlichen senkrecht zu der Flussrichtung des Fluids erstreckenden Abstützabschnitt (24) der Innenwand des Gehäuses (20) unter einer Vorspannung abzustützen, **dadurch gekennzeichnet, dass**
das Dichtungselement (200) eine umlaufende Dichtlippe (205) aufweist, die sich bei dem bestimmungsgemäßen Gebrauch in Richtung stromaufwärts und in Richtung der Innenwand (21) des Gehäuses (20) erstreckt, und deren innere Umfangsfläche einen Ventilsitz bildet, der die Ventilöffnung definiert und der dazu vorgesehen ist, von der Klappe (30) in der Schließ-Stellung des Fluidventils kontaktiert zu werden, wobei zwischen einem die erste Radialfläche (202) aufweisenden Abschnitt des Dichtungselements (200) und der Dichtlippe (205) eine Aussparung (206) gebildet ist, damit sich das Dichtungselement (200) bei einer Bewegung des Fluidventils elastisch in Richtung der Innenwand des Gehäuses ausdehnen kann.

2. Dichtungsanordnung (100) nach Anspruch 1, wobei ein stromaufwärts gelegener Endabschnitt des die erste Radialfläche (202) aufweisenden Abschnitts des Dichtungselements (200) sich radial nach innen verjüngt.

3. Dichtungsanordnung (100) nach Anspruch 1 oder 2, bei der das Dichtungselement (200) eine an den Radialsteg (201) angrenzende, bei bestimmungsgemäßem Gebrauch stromabwärtsseitige, zweite Radialfläche (207) aufweist, die mit Bezug auf die erste Radialfläche (202) in radialer Richtung nach innen versetzt ist.

4. Dichtungsanordnung (100) nach einem der vorhergehenden Ansprüche, bei der sich die Vielzahl der Beine (112) mit Bezug auf den Haltering-Anlageabschnitt (111) über einen äußeren gebogenen Abschnitt unter einem stumpfen Winkel radial nach außen erstrecken.

5. Dichtungsanordnung (100) nach einem der vorhergehenden Ansprüche, bei der der Haltering (110) einen inneren gebogenen Abschnitt (113) aufweist, der sich bei dem bestimmungsgemäßen Gebrauch von dem Haltering-Anlageabschnitt (111) im Wesentlichen in Richtung stromabwärts erstreckt, und insbesondere der zweiten Radialfläche (207) des Radialstegs (201) gegenüberliegt.

6. Dichtungsanordnung (100) nach einem der vorhergehenden Ansprüche, bei der die erste Seitenfläche (203) und/oder die zweite Seitenfläche (204) des Radialstegs (201) als strukturierte Oberfläche gebildet ist und/oder zumindest eine ringförmige Rippe (208) aufweist.

7. Fluidventil, insbesondere für eine Gasleitung, insbesondere einer Brennstoffzelle und/oder eines Kraftfahrzeugantriebs, wobei das Fluidventil ein Gehäuse (20) mit einer Innenwand (21), eine Klappe (30) und eine Dichtungsanordnung (100) nach einem der vorhergehenden Ansprüche aufweist, wobei das Fluidventil dazu eingerichtet ist, einen Fluidfluss durch eine Ventilöffnung des Fluidventils (10) durch Verstellen einer Position der Klappe (30) zwischen einer Schließ-Stellung und einer Offen-Stellung zu steuern, wobei die Innenwand (21) des Gehäuses (20) die Gegenzentrierfläche (23), die Anlagefläche (22) und den Abstützabschnitt (24) aufweist, die erste Radialfläche (202) des Dichtungselements (200) an der Gegenzentrierfläche (23) unter einer Vorspannung anliegt, die erste Seitenfläche (203) des Radialstegs (201) an der Anlagefläche (22) anliegt, die Haltering-Anlagefläche an der zweiten Seitenfläche (204) des Radialstegs (201) anliegt, und freie Enden von zumindest einer Teilmenge der Vielzahl von Beinen (112) an dem Abstützabschnitt (24) unter einer Vorspannung abgestützt sind.

8. Fluidventil nach Anspruch 7, bei dem das Dichtungselement (200) die umlaufende Dichtlippe (205) aufweist, die Innenwand (21) einen stromaufwärts an die Gegenzentrierfläche (23) anschließenden, sich weitenden Abschnitt aufweist, und eine äußere Umfangsfläche der Dichtlippe (205) beabstandet von dem sich weitenden Abschnitt ist und diesem gegenüberliegt.

9. Fluidventil nach Anspruch 8, bei dem die Innenwand (21) einen stromaufwärts an den sich weitenden Abschnitt anschließenden geradlinigen Abschnitt aufweist, der sich parallel zu der Flussrichtung des Fluids erstreckt.

10. Fluidventil nach Anspruch 9, bei dem die Innenwand (21) einen stromabwärts an die Gegenzentrierfläche (23) anschließenden Abschnitt aufweist, der sich senkrecht zu der Flussrichtung des Fluids radial nach außen erstreckt und die Anlagefläche (22) aufweist.

11. Fluidventil nach Anspruch 10, bei dem die Innenwand (21) einen stromabwärts an den an die Gegenzentrierfläche (23) anschließenden Abschnitt anschließenden weiteren Abschnitt aufweist, der sich parallel zu der Flussrichtung des Fluids erstreckt, wobei ein Teilabschnitt des weiteren Abschnitts einer nach außen weisenden Oberseite des Radialstegs (201) gegenüberliegt und von dieser beabstandet ist.

12. Fluidventil nach Anspruch 11, bei dem der Abstützabschnitt (24) stromabwärts an den weiteren Abschnitt anschließt, und sich ausgehend von dem weiteren Abschnitt radial nach innen erstreckt.

13. Fluidventil nach Anspruch 12, bei dem die Innenwand (21) einen stromabwärts an den Abstützabschnitt (24) anschließenden weiteren anderen Abschnitt aufweist mit einem ersten, an den Abstützabschnitt (24) anschließenden Abschnitt, der sich parallel zu der Flussrichtung des Fluids erstreckt, und einem zweiten, an den ersten Abschnitt anschließenden und sich weitenden Abschnitt.

14. Brennstoffzellenanordnung, insbesondere für einen Kraftfahrzeugantrieb, mit wenigstens einer Brennstoffzelle, wenigstens einer Gasleitung, insbesondere zum Zu- und Abführen von Gas zu der bzw. von der Brennstoffzelle, und einem Fluidventil nach einem der Ansprüche 7-13 zum Sperren der Gasleitung
durch Verstellen der Klappe (30) in die Schließstellung.

15. Kraftfahrzeug mit wenigstens einem Fluidventil nach einem der Ansprüche 7-13, insbesondere zum Sperren einer Leitung, insbesondere Gasleitung, des Kraftfahrzeugs, insbesondere einer Kraftfahrzeugantriebs- und/oder Brennstoffzellenanordnungs-Leitung, durch Verstellen der Klappe (30) in die Schließstellung.

16. Verfahren zum Montieren eines Fluidventils nach einem der Ansprüche 7-13, aufweisend die Schritte:
Bereitstellen des Gehäuses (20) mit einer Bohrung,
Einführen einer Welle (40) durch die Bohrung,
Einbringen der Klappe (30) von einer stromabwärts gelegenen Seite des Gehäuses (20) und Montieren der Klappe (30) an der Welle (40),
Einbringen des Dichtungselements (200) von der stromabwärts gelegenen Seite des Gehäuses (20) derart, dass die erste Seitenfläche (203) des Radialstegs (201) an der Anlagefläche (22) der Innenwand (21) des Gehäuses (20) anliegt, und die erste Radialfläche (202) an der Gegenzentrierfläche (23) der Innenwand (21) des Gehäuses anliegt, und
Einbringen des Halterings (110) von der stromabwärts gelegenen Seite des Gehäuses (20) derart, dass die freien Enden der zumindest einen Teilmenge der Vielzahl von Beinen (112) während des Einführens durch einen Kontakt mit der Innenwand (21) des Gehäuses (20) elastisch radial nach innen gebogen werden,
und nach passieren des Abstützabschnitts (24) durch eine Federkraft der Beine (112) nach radial außen zurückschnappen, wenn der Haltering (110) mit der Haltering-Anlagefläche derart gegen die zweite Seitenfläche (204) des Radialstegs (201) gedrückt wird, dass der Radialsteg (201) entlang der Flussrichtung des Fluids zusammengedrückt wird.

## Claims

1. Sealing arrangement (100) for use in a fluid valve (10) which has a housing (20) and a flap (30) and which is configured to control a fluid flow through a valve opening of the fluid valve (10) by adjusting a position of the flap (30) between a closed position and an open position, wherein the sealing arrangement (100) has a retaining ring (110) with a retaining-ring contact portion (111) and a multiplicity of legs (112), and an annular, flexible sealing element (200) which has an encircling radial web (201) and a first radial surface (202) which is adjacent to the radial web (201), is on the upstream side during use as intended and which is configured to act as a centring surface for an interference fit with a corresponding mating centring surface (23) of an inner wall (21) of the housing (20), wherein a first side surface (203) of the radial web (201) that is on the upstream side during use as intended is provided to lie against a contact surface (22) of the inner wall (21) of the housing (20), the retaining-ring contact portion (111) has a retaining-ring contact surface which, during the use as intended, is provided to lie against a second side surface (204) of the radial web (201) that is on the downstream side during the use as intended, and free ends of at least a partial quantity of the multiplicity of legs (112) are provided, during the use as intended, to be supported under a prestress against a supporting portion (24) of the inner wall of the housing (20), said supporting portion (24) extending substantially perpendicular to the direction of flow of the fluid, **characterized in that** the sealing element (200) has an encircling sealing lip (205) which, during the use as intended, extends in a direction upstream and in the direction of the inner wall (21) of the housing (20), and the inner circumferential surface of which forms a valve seat which defines the valve opening and which is provided to be contacted by the flap (30) in the closed position of the fluid valve, wherein a recess (206) is formed between a portion of the sealing element (200) that has the first radial surface (202) and the sealing lip (205) so that the sealing element (200) can expand elastically in the direction of the inner wall of the housing during a movement of the fluid valve.

2. Sealing arrangement (100) according to Claim 1, wherein an upstream end portion of the portion of the sealing element (200) that has the first radial surface (202) tapers radially inwards.

3. Sealing arrangement (100) according to Claim 1 or 2, in which the sealing element (200) has a second radial surface (207) which is adjacent to the radial web (201), is on the downstream side during use as intended and which is offset inwards in the radial direction with respect to the first radial surface (202).

4. Sealing arrangement (100) according to one of the preceding claims, in which the multiplicity of legs (112) extend radially outwards via an outer bent portion at an obtuse angle with respect to the retaining-ring contact portion (111).

5. Sealing arrangement (100) according to one of the preceding claims, in which the retaining ring (110) has an inner bent portion (113) which, during the use as intended, extends substantially in a direction downstream from the retaining-ring contact portion (111) and in particular lies opposite the second radial surface (207) of the radial web (201).

6. Sealing arrangement (100) according to one of the preceding claims, in which the first side surface (203) and/or the second side surface (204) of the radial web (201) is formed as a structured surface and/or has at least one annular rib (208).

7. Fluid valve, in particular for a gas line, in particular of a fuel cell and/or a motor vehicle drive, wherein the fluid valve has a housing (20) with an inner wall (21), and has a flap (30) and a sealing arrangement (100) according to one of the preceding claims, wherein the fluid valve is configured to control a fluid flow through a valve opening of the fluid valve (10) by adjusting a position of the flap (30) between a closed position and an open position, wherein the inner wall (21) of the housing (20) has the mating centring surface (23), the contact surface (22) and the supporting portion (24), the first radial surface (202) of the sealing element (200) lies under a prestress against the mating centring surface (23), the first side surface (203) of the radial web (201) lies against the contact surface (22), the retaining-ring contact surface lies against the second side surface (204) of the radial web (201), and free ends of at least a partial quantity of the multiplicity of legs (112) are supported on the supporting portion (24) under a prestress.

8. Fluid valve according to Claim 7, in which the sealing element (200) has the encircling sealing lip (205), the inner wall (21) has an expanding portion adjoining the mating centring surface (23) upstream, and an outer circumferential surface of the sealing lip (205) is spaced apart from the expanding portion and lies opposite the latter.

9. Fluid valve according to Claim 8, in which the inner wall (21) has a rectilinear portion which adjoins the expanding portion upstream and extends parallel to the direction of flow of the fluid.

10. Fluid valve according to Claim 9, in which the inner wall (21) has a portion which adjoins the mating centring surface (23) downstream and which extends radially outwards perpendicular to the direction of flow of the fluid and has the contact surface (22).

11. Fluid valve according to Claim 10, in which the inner wall (21) has a further portion which adjoins the portion, which adjoins the mating centring surface (23), downstream and which extends parallel to the direction of flow of the fluid, wherein a subsection of the further portion lies opposite an outwardly facing upper side of the radial web (201) and is spaced apart from said upper side.

12. Fluid valve according to Claim 11, in which the supporting portion (24) adjoins the further portion downstream, and extends radially inwards from the further portion.

13. Fluid valve according to Claim 12, in which the inner wall (21) has a further, different portion which adjoins the supporting portion (24) downstream and has a first portion, which adjoins the supporting portion (24) and extends parallel to the direction of flow of the fluid, and a second portion which adjoins the first portion and expands.

14. Fuel cell arrangement, in particular for a motor vehicle drive, with at least one fuel cell, at least one gas line, in particular for supplying gas to, and discharging gas from, the fuel cell, and a fluid valve according to one of the Claims 7-13 for blocking the gas line by adjusting the flap (30) into the closed position.

15. Motor vehicle with at least one fluid valve according to one of the Claims 7-13, in particular for blocking a line, in particular gas line, of the motor vehicle, in particular a motor vehicle drive line and/or fuel cell arrangement line, by adjusting the flap (30) into the closed position.

16. Method for mounting a fluid valve according to one of the Claims 7-13, having the steps of:
providing the housing (20) having a bore,
inserting a shaft (40) through the bore,
introducing the flap (30) from a downstream side of the housing (20) and mounting the flap (30) on the shaft (40),
introducing the sealing element (200) from the downstream side of the housing (20) in such a manner that the first side surface (203) of the radial web (201) lies against the contact surface (22) of the inner wall (21) of the housing (20), and the first radial surface (202) lies against the mating centring surface (23) of the inner wall (21) of the housing, and
introducing the retaining ring (110) from the downstream side of the housing (20) in such a manner that the free ends of the at least partial quantity of the multiplicity of legs (112) are bent radially inwards elastically during the insertion by contact with the inner wall (21) of the housing (20) and, after passing the supporting portion (24), snap back radially outwards by a spring force of the legs (112) when the retaining ring (110) is pressed with the retaining-ring contact surface against the second side surface (204) of the radial web (201) in such a manner that the radial web (201) is compressed along the direction of flow of the fluid.

## Revendications

1. Ensemble de joint d'étanchéité (100) destiné à être utilisé dans une soupape de fluide (10) comportant un boîtier (20) et un clapet (30), qui est mise au point pour commander un écoulement de fluide à travers une ouverture de soupape de la soupape de fluide (10) en ajustant une position du clapet (30) entre une position de fermeture et une position ouverte, l'ensemble de joint d'étanchéité (100) comportant une bague de maintien (110) avec une section d'appui (111) de bague de maintien et une pluralité de pattes (112), et un élément de joint d'étanchéité (200) annulaire flexible, qui comporte une entretoise radiale (201) périphérique et une première face radiale (202) jouxtant l'entretoise radiale (201), du côté amont lors d'une utilisation conforme à l'usage prévu, qui est mise au point pour servir de face de centrage pour un ajustement serré avec une contre-face de centrage (23) correspondante d'une paroi intérieure (21) du boîtier (20), une première face latérale (203), du côté amont lors de l'utilisation conforme à l'usage prévu, de l'entretoise radiale (201) étant prévue pour reposer sur une face d'appui (22) de la paroi intérieure (21) du boîtier (20), la section d'appui (111) de bague de maintien comportant une face d'appui de bague de maintien, qui est prévue pour lors de l'utilisation conforme à l'usage prévu reposer sur une deuxième face latérale (204), du côté aval lors de l'utilisation conforme à l'usage prévu, de l'entretoise radiale (201) et des extrémités libres d'au moins une quantité partielle de la pluralité de pattes (112) étant prévues lors de l'utilisation conforme à l'usage prévu pour prendre appui sur une section de soutien (24), s'étendant sensiblement perpendiculairement à la direction d'écoulement du fluide, de la paroi intérieure du boîtier (20) sous une précontrainte, **caractérisé en ce que** l'élément d'étanchéité (200) comporte une bague d'étanchéité (205) périphérique, qui s'étend en direction de l'amont et en direction de la paroi intérieure (21) du boîtier (20) lors de l'utilisation conforme à l'usage prévu et dont la face périphérique intérieure forme un siège de soupape, qui définit l'ouverture de soupape et qui est prévu pour être mis en contact par le clapet (30) dans la position de fermeture de la soupape de fluide, un évidement (206) étant formé entre une section de l'élément d'étanchéité (200) comportant la première face radiale (202) et la bague d'étanchéité (205) pour que l'élément d'étanchéité (200) puisse se dilater élastiquement en direction de la paroi intérieure du boîtier lors d'un déplacement de la soupape de fluide.

2. Ensemble d'étanchéité (100) selon la revendication 1, une section d'extrémité placée en amont de la section de l'élément d'étanchéité (200) comportant la première face radiale (202) se rétrécissant vers l'intérieur radialement.

3. Ensemble d'étanchéité (100) selon la revendication 1 ou 2, où l'élément d'étanchéité (200) comporte une deuxième face radiale (207) jouxtant l'entretoise radiale (201), du côté aval lors d'une utilisation conforme à l'usage prévu, qui est décalée vers l'intérieur dans une direction radiale par rapport à la première face radiale (202).

4. Ensemble d'étanchéité (100) selon l'une des revendications précédentes, où la pluralité des pattes (112) s'étendent radialement vers l'extérieur selon un angle obtus sur une section extérieure cintrée par rapport à la section d'appui (111) de bague de maintien.

5. Ensemble d'étanchéité (100) selon l'une des revendications précédentes, où la bague de maintien (110) comporte une section intérieure cintrée (113), qui s'étend sensiblement en direction de l'aval depuis la section d'appui (111) de bague de maintien lors de l'utilisation conforme à l'usage prévu et fait face en particulier à la deuxième face radiale (207) de l'entretoise radiale (201).

6. Ensemble d'étanchéité (100) selon l'une des revendications précédentes, où la première face latérale (203) et/ou la deuxième face latérale (204) de l'entretoise radiale (201) sont formées en tant que surface structurée et/ou comportent au moins une nervure (208) annulaire.

7. Soupape de fluide, en particulier pour une conduite de gaz, en particulier une pile à combustible et/ou un entraînement de véhicule à moteur, la soupape de fluide comportant un boîtier (20) avec une paroi intérieure (21), un clapet (30) et un ensemble de joint d'étanchéité (100) selon l'une des revendications précédentes, la soupape de fluide étant mise au point pour commander un écoulement de fluide à travers une ouverture de soupape de la soupape de fluide (10) en ajustant une position du clapet (30) entre une position de fermeture et une position ouverte, la paroi intérieure (21) du boîtier (20) comportant la contre-face de centrage (23), la face d'appui (22) et la section de soutien (24), la première face radiale (202) de l'élément d'étanchéité (200) reposant sous une précontrainte sur la contre-face de centrage (23), la première face latérale (203) de l'entretoise radiale (201) reposant sur la face d'appui (22), la face d'appui de bague de maintien reposant sur la deuxième face latérale (204) de l'entretoise radiale (201) et des extrémités libres d'au moins une quantité partielle de la pluralité de pattes (112) étant soutenues sous une précontrainte sur la section de soutien (24).

8. Soupape de fluide selon la revendication 7, où l'élément d'étanchéité (200) comporte la lèvre d'étanchéité (205) périphérique, la paroi intérieure (21) comporte une section s'élargissant, se raccordant en amont à la contre-face de centrage (23) et une face périphérique extérieure de la lèvre d'étanchéité (205) est espacée de la section s'élargissant et lui faisant face.

9. Soupape de fluide selon la revendication 8, où la paroi intérieure (21) comporte une section rectiligne se raccordant en amont à la section s'élargissant, qui s'étend parallèlement à la direction d'écoulement du fluide.

10. Soupape de fluide selon la revendication 9, où la paroi intérieure (21) comporte une section se raccordant en aval à la contre-face de centrage (23), qui s'étend radialement vers l'extérieur perpendiculairement à la direction d'écoulement du fluide et comporte la face d'appui (22).

11. Soupape de fluide selon la revendication 10, où la paroi intérieure (21) comporte une section supplémentaire se raccordant en aval à la section se raccordant à la contre-face de centrage (23), qui s'étend parallèlement à la direction d'écoulement du fluide, une section partielle de la section supplémentaire faisant face à un côté supérieur pointant vers l'extérieur de l'entretoise radiale (201) et étant espacée de celle-ci.

12. Soupape de fluide selon la revendication 11, où la section de soutien (24) se raccorde en aval à la section supplémentaire et s'étend radialement vers l'intérieur en partant de la section supplémentaire.

13. Soupape de fluide selon la revendication 12, où la paroi intérieure (21) comporte une autre section supplémentaire se raccordant en aval à la section de soutien (24) avec une première section se raccordant à la section de soutien (24), qui s'étend parallèlement à la direction d'écoulement du fluide, et une deuxième section se raccordant à la première section et s'élargissant.

14. Ensemble à pile à combustible, en particulier pour un entraînement de véhicule à moteur, avec au moins une pile à combustible, au moins une conduite de gaz, en particulier pour amener et évacuer du gaz vers ou de la pile à combustible, et une soupape de fluide selon l'une des revendications 7-13 pour bloquer la conduite de gaz en ajustant le clapet (30) dans la position de fermeture.

15. Véhicule à moteur avec au moins une soupape à fluide selon l'une des revendications 7 - 13, en particulier pour bloquer une conduite, en particulier une conduite de gaz, du véhicule à moteur, en particulier une conduite d'entraînement de véhicule à moteur et/ou d'ensemble à pile à combustible, en ajustant le clapet (30) dans la position de fermeture.

16. Procédé de montage d'une soupape de fluide selon l'une des revendications 7 - 13, comportant les étapes :
de fourniture du boîtier (20) avec un alésage,
d'introduction d'un arbre (40) à travers l'alésage,
d'introduction du clapet (30) depuis un côté placé en aval du boîtier (20) et de montage du clapet (30) sur l'arbre (40),
d'introduction de l'élément d'étanchéité (200) depuis le côté du boîtier (20) placé en aval de telle manière que la première face latérale (203) de l'entretoise radiale (201) repose sur la face d'appui (22) de la paroi intérieure (21) du boîtier (20), et la première face radiale (202) repose sur la contre-face de centrage (23) de la paroi intérieure (21) du boîtier, et d'introduction de la bague (110) de maintien depuis le côté placé en aval du boîtier (20) de telle manière que les deux extrémités de l'au moins une quantité partielle de la pluralité de pattes (112) sont cintrées élastiquement radialement vers l'intérieur pendant l'introduction par un contact avec la paroi intérieure (21) du boîtier (20) et s'encliquettent à nouveau vers l'extérieur radialement après le passage d'une force de ressort des pattes (112) à travers la section de soutien (24) lorsque la bague (110) de maintien est poussée avec la face d'appui de bague de maintien contre la deuxième face latérale (204) de l'entretoise radiale (201) de telle manière que l'entretoise radiale (201) est comprimée le long de la direction d'écoulement du fluide.
